(19)

**Europäisches Patentamt**
**European Patent Office**
**Office européen des brevets**

(11) **EP 3 819 489 B1**

(12) **EUROPEAN PATENT SPECIFICATION**

(45) Date of publication and mention
of the grant of the patent:
**04.06.2025 Bulletin 2025/23**

(21) Application number: **19306439.1**

(22) Date of filing: **07.11.2019**

(51) International Patent Classification (IPC):
*F02D 41/00* *(2006.01)*     *F01N 9/00* *(2006.01)*
*F02D 41/06* *(2006.01)*     *F02D 41/24* *(2006.01)*
*F01N 11/00* *(2006.01)*

(52) Cooperative Patent Classification (CPC):
**F02D 41/2451; F01N 9/002; F01N 11/00;**
**F01N 11/002; F02D 41/0065; F02D 41/068;**
**F02D 41/2441;** F01N 2900/1402; F02D 2200/021;
F02D 2200/023; Y02T 10/40

(54) **SYSTEM AND METHOD FOR EMISSIONS DETERMINATION**

SYSTEM UND VERFAHREN ZUR DETERMINATION VON EMISSIONEN

SYSTÈME ET PROCÉDÉ POUR DETERMINER DES EMISSIONS

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**12.05.2021 Bulletin 2021/19**

(73) Proprietor: **TOYOTA JIDOSHA KABUSHIKI**
**KAISHA**
**Toyota-shi, Aichi-ken, 471-8571 (JP)**

(72) Inventors:
• **MAEDA, Kotaro**
  **1140 BRUSSELS (BE)**
• **LE LOUVETEL-POILLY, Julie**
  **1140 BRUSSELS (BE)**
• **LAFOSSAS, François**
  **1140 BRUSSELS (BE)**

(74) Representative: **Cabinet Beau de Loménie**
**158, rue de l'Université**
**75340 Paris Cedex 07 (FR)**

(56) References cited:
**WO-A1-2018/224136     WO-A2-2006/055992**
**US-A1- 2011 209 460     US-B1- 10 156 175**

• PU YI-HAO ET AL: "Machine learning for nano-scale particulate matter distribution from gasoline direct injection engine", APPLIED THERMAL ENGINEERING, PERGAMON, OXFORD, GB, vol. 125, 4 July 2017 (2017-07-04), pages 336 - 345, XP085156229, ISSN: 1359-4311, DOI: 10.1016/J.APPLTHERMALENG.2017.07.021
• WONG KA IN ET AL: "Modelling of diesel engine performance using advanced machine learning methods under scarce and exponential data set", APPLIED SOFT COMPUTING, ELSEVIER, AMSTERDAM, NL, vol. 13, no. 11, 3 July 2013 (2013-07-03), pages 4428 - 4441, XP028697024, ISSN: 1568-4946, DOI: 10.1016/ J.ASOC.2013.06.006

**Description**

TECHNICAL FIELD

The present disclosure is related to the determination of gasoline engine emissions, and to the determination of the amount of soot contained in a gasoline particulate filter interposed on the exhaust pipe of a gasoline engine.

BACKGROUND ART

Particulate emissions from gasoline powered-vehicles are a public health concern and a potential major source of ambient particle pollution in highly populated urban areas.

For this reason, accurately measuring the particulate emissions of gasoline powered-vehicles is of primary interest for controlling the particulate emissions of a vehicle.

The particulate emissions of a gasoline powered-vehicle can be calculated based on the particulate emissions at the outlet of its engine; where importantly, the particulate emissions at the outlet of the engine mean here specifically the particulate emissions at the outlet of the engine body, that is, the point shortly downstream of the exhaust manifold of the engine where the exhaust gases exhausted by the different cylinders are mixed to form a common exhaust flow (but upstream of any exhaust gas after treatment device, such as a gasoline particulate filters (GPF) or the like.

In addition, in order to control the particulate emissions of vehicles, gasoline particulate filters (GPF) have been developed as an emission aftertreatment technology to control the particulate emissions from gasoline engines.

As explained below, the value of the particulate emissions at the outlet of an engine can be used to determine the amount of soot contained in the gasoline particulate filter of gasoline engines. Controlling this amount of soot also contributes to ensure that the amount of particulate emissions of the vehicle remains as low as possible.

For these reasons, there is a need for a method or a system to determine the particulate emissions at the outlet of a gasoline engine.

WONG, Ka In, et al. (Modelling of diesel engine performance using advanced machine learning methods under scarce and exponential data set. Applied Soft Computing, 2013, vol. 13, no 11, p. 4428-4441) discloses logarithmic transformation of dependent variables applied to the modelling of diesel engine performance.

DISCLOSURE OF THE INVENTION

A first purpose of the present disclosure is therefore to propose a method for determining particulate emissions at an outlet of a gasoline engine.

In this purpose, the following method is proposed. This method comprises:

determining a logarithmic particulate emission value at the engine outlet by means of a dynamic machine-learning-based model, using parameters associated with an engine operating state as an input; the parameters associated with the engine operating state comprising engine rotational speed, air-mass flow, and air-fuel ratio; and applying an exponential function to the determined logarithmic particulate emission value to yield the particulate emissions at the engine outlet; the machine-learning-based model being trained to determine logarithmic particulate emission values at an outlet of a gasoline engine using a training method with a training dataset and a loss function;

the training dataset comprising parameters associated with an engine operating state, as an input, and logarithmic particulate emission values at the engine outlet obtained by applying a logarithm function to measured particulate emission values at the engine outlet, as ground truth;

an output of the loss function being based on a difference between a logarithm of measured values of the particulate emission values at the engine outlet and outputted values of the particulate emission values at the engine outlet outputted by the dynamic machine-learning-based unit.

Indeed, the present inventors have found that the particulate emissions at the outlet of a gasoline engine vary in a massively non-linear fashion. In order to cope with this non-linearity, advantageously the proposed method proposes using a dynamic machine-learning-based model which outputs the logarithmic particulate emission values, rather than the particulate emission values themselves. This change of variable makes it possible to train the dynamic machine-learning-based model reliably, so as to obtain a model which can accurately predict the logarithmic particulate emission value. Based on this value, the value of the particulate emissions can then be easily determined by applying an exponential function.

A dynamic model is an iterative algorithm which, at a time step k, outputs values which are based on previous values of parameters (or variables) of the dynamic machine-learning-based model. By contrast, a static model is a model which outputs values which are based on the values inputted to the model at the time step under consideration, but are not based on previous values of parameters or variables of the model.

A machine-learning-based model is an algorithm which comprises parameters (or variables) which are determined by machine learning.

In some embodiments, the engine includes an EGR passage for exhaust gas recirculation. The EGR rate through this passage is defined here as a flow ratio of the gas flow through the EGR passage and the gas flow at an engine inlet. In such embodiments, the EGR rate may be used as an input for determining the logarithmic particulate emission value. This increases the accuracy of the determination of the logarithmic particulate emission values, in particular during strong variations of the EGR rate.

Please note that in the above definition of the EGR rate, the inlet of the engine is the point shortly upstream of the intake port of the engine (and downstream of an injection point of an EGR passage, if any) where the intake gas flows before being divided and injected in the different cylinders. The inlet flow is therefore the total flow at the engine inlet (or cylinders inlet). Since typically, in a gasoline engine, the EGR injection point may be located just before the intake valve, in such an engine the inlet of the engine is just before the intake valve, downstream the EGR injection point.

In some embodiments, a water temperature and/or an oil temperature is/are used as an input for determining the logarithmic particulate emission value. This means that the water temperature and/or the oil temperature is an input of the dynamic machine-learning-based model. The water temperature and the oil temperature are the temperatures respectively of water circulating in a cooling circuit of the engine and of oil circulating in a cooling circuit of the engine.

In these embodiments, the dynamic machine-learning-based model is informed of the temperature of the engine. It has been found that this temperature has a significant impact on the particulate emissions; therefore, providing the water temperature and/or the oil temperature as an input of the dynamic machine-learning-based model helps increase the accuracy of the prediction realised by this model, especially at or shortly after a cold start of the engine.

In addition, it has been found that at start of the engine, the values of the operating parameters of the engine tend to be always the same, while the particulate emissions sometimes vary substantially. Therefore, in these circumstances, it may be difficult to accurately determine the particulate emissions even with the dynamic machine-learning-based model.

In order to improve the prediction accuracy shortly after the engine is started, in some embodiments, a method for determining particulate emissions at an outlet of a gasoline engine is proposed. This method comprises:

　　detecting that the engine is started; and,
　　when it has been detected that the engine is started:

　　• during a first period, determining particulate emissions at the engine outlet using a predetermined model and based on oil temperature and on water temperature; and
　　• for a second period starting just after the first period, determining or determining the particulate emissions at the engine outlet using the above-defined method.

That is, in order to determine the particulate emissions over a certain period of time after the engine is started, the method combines two base methods: a first base method based on a predetermined model, during a first period; and the above-proposed method, as a second base method during a second period following the first period. Indeed, it has appeared that each of these base methods may be more efficient respectively for the period immediately after the start of the engine (first period) or for the following period (second period).

The predetermined model can be in particular a static model. It can be for instance tabular values stored in a database, and recorded for different temperatures of the oil temperature and/or the water temperature. In particular, for each value of the oil and/or water temperature(s), the tabular value can be obtained by averaging particulate emission values at the outlet of the engine, all measured when the oil temperature and/or the water temperature has(have) the value(s) under consideration.

A second purpose of the present disclosure is to propose a method for determining the soot amount contained in a gasoline particulate filter interposed on the exhaust pipe of an engine.

In this purpose, a method is proposed, which comprises determining particulate emissions at the engine outlet using any one of the above-defined methods for determining particulate emissions, and determining the soot amount based on a gasoline particulate filter aftertreatment model and the determined particulate emissions at the engine outlet.

Indeed, by means of a gasoline particulate filter aftertreatment model, it is possible to calculate the amount of soot in the gasoline particulate filter on the basis of the particulate emissions at the outlet of the engine.

For example, a gasoline particulate filter aftertreatment model is described in the article "Modeling of gasoline particulate emission control system and component", by M. Mitsouridis et al., in chapter 15 of the SAE Handbook "Reducing Particulate emissions in Gasoline Engines".

According to a further aspect of the present disclosure, the above-proposed methods can be used to control the engine based on particulate emissions at the outlet of the engine as determined or the soot amount in the gasoline particulate filter as determined.

The present disclosure further encompasses an engine control unit configured to carry out any one of the above-defined methods.

Since the proposed methods imply using dynamic machine-learning-based models, the present disclosure also encompasses training methods for such models.

Accordingly, in a further aspect of the present disclosure, a training method for training a system for determining particulate emissions at an outlet of a gasoline engine with a training dataset is proposed, wherein:

the system for determining particulate emissions comprises a dynamic machine-learning-based unit; the method comprises training the dynamic machine-learning-based unit using a loss function and a training data set; the training dataset comprises parameters associated with an engine operating state, as an input, and particulate emission values at the engine outlet obtained by applying a logarithm function to particulate emission values at the engine outlet, as ground truth; and an output of the loss function is based on a difference between a logarithm of measured values of the particulate emission values at the engine outlet and outputted values of the particulate emission values at the engine outlet outputted by the dynamic machine-learning-based unit.

The 'ground truth' has the usual meaning of data which, in a training data set for a machine-learning-based model, correspond to the desired output of the machine-learning-based model.

Indeed, by including inside the loss function the logarithm function, the above-proposed method makes it possible to train the machine-learning-based model to predict the particulate emissions at the outlet of the engine, although the particulate emissions depend on a highly non-linear fashion from the operating parameters of the engine.

On the other hand, in relation with the first method proposed above for determining particulate emissions, the present disclosure also includes a training method for training a dynamic machine-learning-based unit to determine logarithmic particulate emissions at an outlet of a gasoline engine with a training dataset; the logarithmic particulate emission value at the engine outlet being a value obtained by applying a logarithm function to a particulate emission value at the engine outlet; the training dataset comprising parameters associated with an engine operating state, as an input, and logarithmic particulate emission values at the engine outlet obtained by applying a logarithm function to particulate emission values at the engine outlet, as ground truth; the parameters associated with the engine operating state comprising engine rotational speed, air-mass flow, and air-fuel ratio.

The present disclosure accordingly also includes a training method for training a system for determining particulate emissions at an outlet of a gasoline engine, the method comprising training a dynamic machine-learning-based unit to determine logarithmic particulate emissions at the outlet of the gasoline engine as proposed above; the dynamic machine-learning-based unit being trained using a loss function and a training data set, an output of the loss function being based on a difference between a logarithm of measured values of the particulate emission values at the engine outlet and outputted values of the particulate emission values at the engine outlet outputted by the dynamic machine-learning-based unit.

In an embodiment of the training method, the dynamic machine-learning-based system comprises an exponential unit configured to apply an exponential function to the determined logarithmic particulate emission value to yield the particulate emissions at the engine outlet.

In the embodiments in which the engine includes an EGR passage for exhaust gas recirculation, the EGR rate can be used as an input of the dynamic machine-learning-based unit. Consequently the EGR rate is an input in the training data set.

In some embodiments, oil temperature and/or water temperature is used as an input of the dynamic machine-learning-based unit.

In this case, the periods of operation of the engine during which the data constituting the training data set is recorded preferably include periods when the engine is cold (cold start), and periods when the engine is warm.

Based on such data, the dynamic machine-learning-based unit learns to make its predictions taking into account the temperature of the engine (as indicated by oil or water temperature), which improves the accuracy of its predictions in particular when the engine is cold.

The above described training methods produce trained systems, which are capable of determining particulate emissions. The present disclosure therefore also concerns a system for determining particulate emissions at an outlet of a gasoline engine, trained by one of the above-described methods.

The present disclosure therefore also provides a system for determining particulate emissions at an outlet of a gasoline engine, the system comprising processing means configured to determine a logarithmic particulate emission value at the engine outlet by means of a dynamic machine-learning-based model, using parameters associated with an engine operating state as an input; and to apply an exponential function to the determined logarithmic particulate emission value to yield the particulate emissions at the engine outlet; and the parameters associated with the engine operating state comprising engine rotational speed, air-mass flow, and air-fuel ratio;

the machine-learning-based model being trained to determine logarithmic particulate emission values at an outlet of a gasoline engine using a training method with a training dataset and a loss function; the training dataset comprising parameters associated with an engine operating state, as an input, and logarithmic particulate emission values at the engine outlet obtained by applying a logarithm function to measured particulate emission values at the engine outlet, as ground truth;

an output of the loss function being based on a difference between a logarithm of measured values of the particulate emission values at the engine outlet and outputted values of the particulate emission values at the engine outlet outputted by the dynamic machine-learning-based unit.

The following improvement can be considered to improve the prediction accuracy of the above-defined systems when the engine is started.

In a system for determining particulate emissions as described above, the processing means can be configured:

to detect that the engine is started; and,
when it has been detected that the engine is started, during a first period, to determine particulate emissions at the engine outlet using a predetermined static model and based on oil and/or water temperature(s).

The present disclosure therefore also provides a system for determining soot amount contained in a gasoline particulate filter interposed on the exhaust pipe of an engine,
the system comprising a system for determining particulate emissions as defined above. In this case, the processing means are further configured to determine the soot amount based on a gasoline particulate filter after-treatment model and the determined particulate emissions at the engine outlet.

The present disclosure therefore also provides an engine control unit, comprising the system for determining particulate emissions as defined above, and configured to control the engine based on the determined particulate emissions at the outlet of the engine. Controlling the engine can mean here for instance controlling at least one valve of the engine.

In a particular implementation, the various steps of any one of the above-presented methods are determined by computer program instructions.

Accordingly, the present disclosure also provides a computer program which is stored on a computer readable storage media, and which is suitable for being performed on a computer, the program including instructions adapted to perform the steps of one of the above-defined methods when it is run on the computer.

The computer program may use any programming language, and be in the form of source code, object code, or code intermediate between source code and object code, such as in a partially compiled form, or in any other desirable form. The present disclosure also provides a computer-readable recording medium including instructions of a computer program as defined above.

The recording medium may be an entity or device capable of storing the program. For example, the medium may comprise storage means, such as a read only memory (ROM), e.g. a compact disk (CD) ROM, or a microelectronic circuit ROM, or indeed magnetic recording means, e.g. a floppy disk or a hard disk.

Alternatively, the recording medium may be an integrated circuit in which the program is incorporated, the circuit being adapted to execute or to be used in the execution of one of the methods in question.

BRIEF DESCRIPTION OF THE DRAWINGS

The present invention may be better understood and its numerous other objects and advantages will become apparent to those skilled in the art by reference to the accompanying drawing wherein like reference numerals refer to like elements in the several figures and in which :

Fig.1 shows an exemplary representation of a gasoline engine and its exhaust gas after-treatment system according to embodiments of the present disclosure;
Fig.2 shows a schematic representation of an exemplary system for determining particulate emissions according to embodiments of the present disclosure;
Fig.3 shows a flowchart highlighting exemplary methods according to the disclosure;
Fig.4 shows a flowchart highlighting exemplary methods for training a system for determining particulate emissions according to embodiments of the present disclosure;
Fig 5 shows a graph comparing measured particulate emissions values to particulate emissions values determined using a system according to the present disclosure; and
Fig 6 shows a graph explaining how particulate emissions values are determined in some embodiments of the present disclosure.

DESCRIPTION OF THE EMBODIMENTS

Reference will now be made in detail to exemplary embodiments of the disclosure, examples of which are illustrated in the accompanying drawings. Wherever possible, the same reference numbers will be used throughout the drawings to refer to the same or like parts.

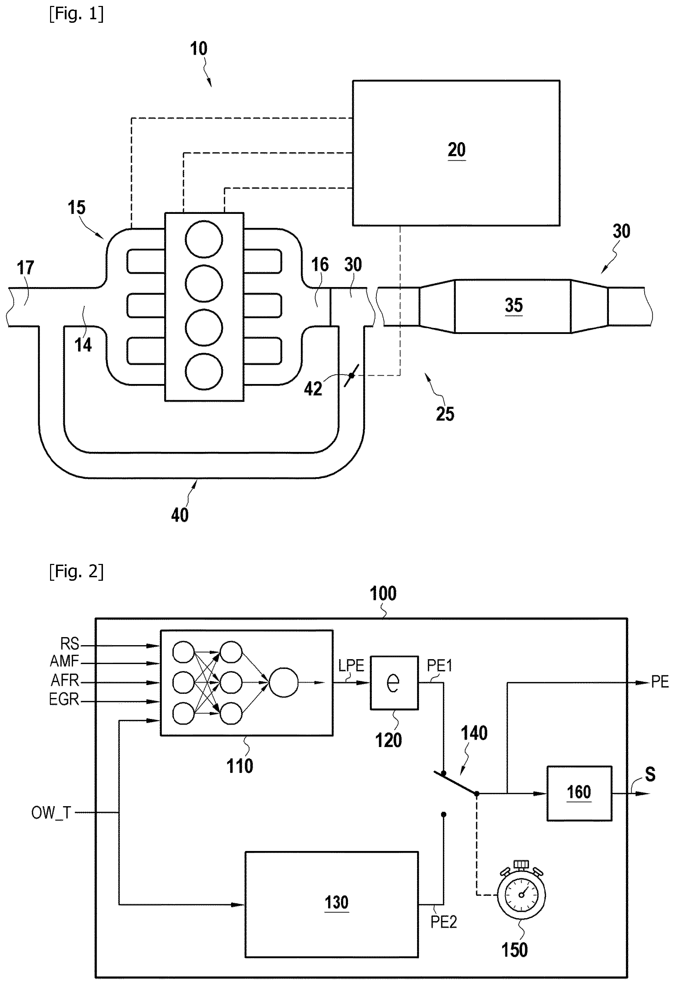

Fig. 1 shows an exemplary representation of an engine and in particular its exhaust gas after-treatment system according to embodiments of the present disclosure. As one of skill will come to understand, embodiments of the present disclosure may be implemented both on an actual vehicle comprising real-world components as described herein, or within a vehicle "simulator" capable of simulating real driving conditions and real-world components, i.e., a simulated engine. For example, ASCMO software from ETAS provides one such system capable of determining emissions according to the present disclosure, and the presently disclosed embodiments may be simulated using such software. Other simulation or modelling solutions may also be implemented as desired, for example, SIMULINK from MathWorks, or any other suitable simulator capable of simulating engine functionality and outputting result information. With this understanding, the present disclosure will be generally undertaken in the context of a real-world vehicle, however, the disclosure is equally applicable in a simulated environment, and results of such a simulated environment can be used to accurately design a real-world engine, in particular its control system.

A gasoline engine 10 according to the present disclosure may include an engine body 15, an electronic control unit (ECU) 20, and an exhaust gas after treatment system 25 including an exhaust pipe 30. In this embodiment, the exhaust after-treatment system 30 comprises a gasoline particulate filter 35, interposed on the exhaust pipe 30. The exhaust gas after treatment system 25 further comprises an EGR passage 40, which connects the exhaust pipe 30 to the intake pipe 17, and an EGR valve 42, interposed on the EGR passage 40.

In another (not shown) embodiment, the exhaust after-treatment system 30 could further comprise a three-way catalyst, interposed on the exhaust pipe 30, either upstream or downstream of the branch between the exhaust pipe 30 and the EGR passage 40.

Gasoline engine 10 may comprise any suitable combustion engine body configured to power a vehicle. Engine 10 may be linked to one or more transmissions configured to transfer rotational energy of engine 10 to wheels or other driving means of the vehicle. Because load on engine 10 varies according to driving conditions and demands, among others, engine 10 may be configured to operate at any number of operating states, an operating state being defined by at least an engine rotational speed RS, an air mass flow AMF to engine 10, and an air-fuel ratio AFR at the inlet of engine body 15. One of skill will understand that additional parameters may define an operating state of engine 10, but that the presently described parameters are useful for purposes of the present disclosure.

ECU 20 may be configured as processing means to receive information related to vehicle operation (either real-world or simulated) and to provide commands related to continued operation of the vehicle. For example, ECU 20 may be configured to determine an engine operating stated based on inputs to ECU 20. These inputs may comprise for example the engine rotational speed RS, the air-mass flow AMF and the air-fuel ratio AFR, among others.

ECU 20 may further comprise and/or be linked with a memory (not shown) configured to store information related to the vehicle, for example, data maps related to operating conditions, target air/fuel ratios, mass flows (e.g., air and fuel), as well as various algorithms and data-based models (e.g., dynamic and static) for determining output emissions and corrections, as will be described in greater detail below.

STRUCTURE AND FUNCTIONING

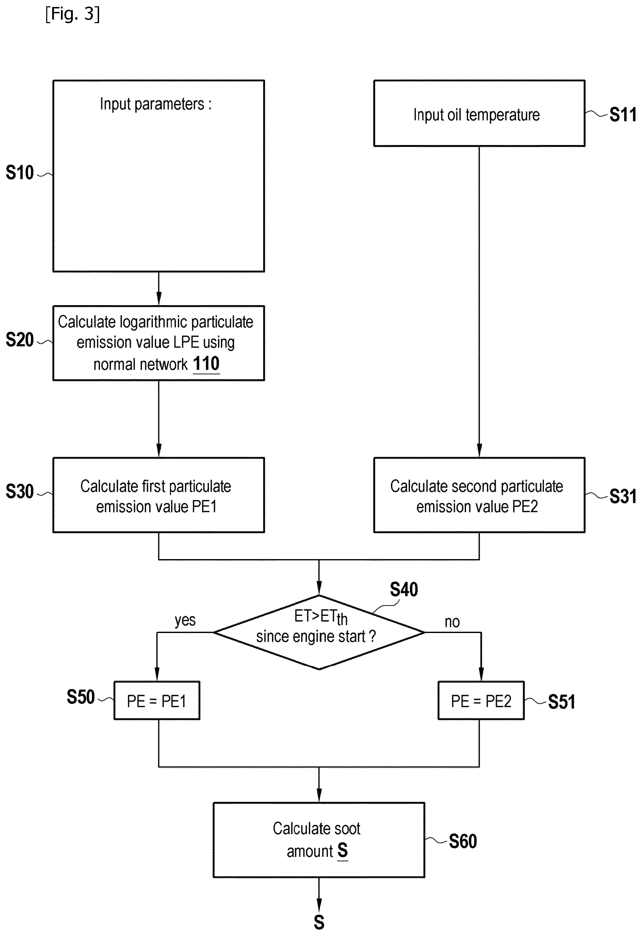

Fig. 2 shows a schematic representation of an exemplary system 100 for determining particulate emissions at an outlet of a gasoline engine according to embodiments of the present disclosure. Fig.3 is a block diagram presenting a corresponding methods to calculate the particulate emissions and the soot content of a gasoline particulate filter, in accordance with the present disclosure. These methods can be implemented with system 100.

System 100 is designed to calculate the particulate emissions PE at the outlet 16 of engine 10, and the soot amount S in the gasoline particulate filter 35.

In this purpose, neural network system 100 comprises a neural network 110, an exponential unit 120, a static-model based emissions determination unit 130, a selector unit 140, a timer 150, and a soot determination unit 160. Neural network system 100 and its various components are functional units of ECU 20.

The neural network 110 is an example of a dynamic-learning based model used by the ECU 20 (as processing means) to determine the particulate emissions at the outlet of engine 10 and subsequently the soot content of the gasoline particulate filter 35. Other units than a neural network can be used to form the dynamic machine-learning-based unit. For instance, the dynamic machine-learning-based unit can be a computer configured to perform a linear or non-linear identification to identify the function yielding the particulate emissions at the outlet of the engine.

The neural network 110 is configured to receive periodically the following inputs: the engine rotational speed RS, the air-mass flow AMF in the intake pipe 17 of the engine, the air-fuel ratio AFR at the intake of the engine and the EGR rate EGR, as well as the oil temperature and/or the water temperature OW_T (step S10).

Based on these parameters, neural network 110 outputs the logarithmic particulate emission value LPE (as will be explained hereafter) (step S20), and transmits it to the exponential unit 120.

The exponential unit 120 is configured, when it receives the determined logarithmic particulate emission value (LPE), to apply an exponential function to the determined logarithmic particulate emission value (LPE), thus yielding the first value PE1 of the particulate emissions at the engine outlet (step S30).

In parallel, the oil temperature and/or the water temperature OW_T is inputted at each time step to unit 130 (step S11). A second value PE2 of the particulate emissions value is calculated by the static-model based emissions determination unit 130, based on the oil and/or water temperature(s) OW_T (step S31).

ECU 20 then checks whether engine has just started: Elapsed time ET elapsed since the engine has been started is compared to a predetermined threshold (in the present case, 2 seconds) (step S40).

If it is determined that the elapsed time ET since the engine has been started is less than the predetermined threshold, the particulate emissions are determined to be equal at this time point to value PE2 (step S51). In this purpose, timer 150 is started when the engine is started; and selector 140 is configured to transmit the second particulate emissions value PE2 when it is determined that the time elapsed since engine start is less than the threshold.

Conversely, if it is determined that the elapsed time ET is more than the predetermined threshold, the particulate emissions are determined to be equal at this time point to value PE1 (step S50). In this purpose, selector 140 is configured to transmit the first particulate emissions value PE1 when it is determined that the time elapsed since engine start exceeds the threshold.

Consequently, during the first period P1, the particulate emissions are determined to be equal to the second particulate emissions value PE2, while in the period P2 following period P1, the particulate emissions are determined to be equal to the first particulate emissions value PE1.

Indeed, it has been observed that at restart, the values of the operating parameters of the engine tend to be always the same, while the particulate emissions vary substantially. Therefore, it is not possible for the neural network 110 and the exponential unit 120 to accurately determine the particulate emissions during this phase. For this reason, during the first few seconds after cold start, the emissions value is the second emissions value PE2 calculated by the static-model based emissions determination unit 130. This second emissions value PE2 is based on oil and/or water temperature(s) OW_T, which appears to be the main influencing factor for particulate emissions during this phase.

The determined value PE of the particulate emissions is then transmitted to other components of the vehicle which use this information.

In particular, the particulate emissions value PE (PE1 or PE2, as the case may be) is transmitted to the soot determination unit 160. This soot determination unit 160 determines, on the basis of this information and of other appropriate parameters, the current value of the soot contained in the gasoline particulate filter 30. The soot determination unit uses a gasoline particulate filter after-treatment model which uses the particulate emissions value as an input to calculate soot in a gasoline particulate filter as follows:

At each time step, the amount of soot that is added/substracted from the gasoline particulate filter is calculated using the following equation:

$$dSoot = PE - P_{through} - P_{oxydized}$$

where

dSoot represents the amount of soot added to the GPF or retrieved from the GPF during the considered period;

PE represents the particulate emissions value at the outlet of the engine, as calculated using the above-described method;

$P_{through}$ represents the amount of particulate matter which flows through the GPF. This amount can be estimated based on pressure values upstream and downstream the GPF.

$P_{oxydized}$ represents the amount of particulate matter which is oxydized during the considered period and therefore disappear from the GPF. This amount can be estimated based on the temperature of the GPF and the amount of soot present in the GPF.

On the basis of the successive values of dSoot, the amount of soot in the GPF is calculated by integrating the values of dSoot over time (step S60).

TRAINING

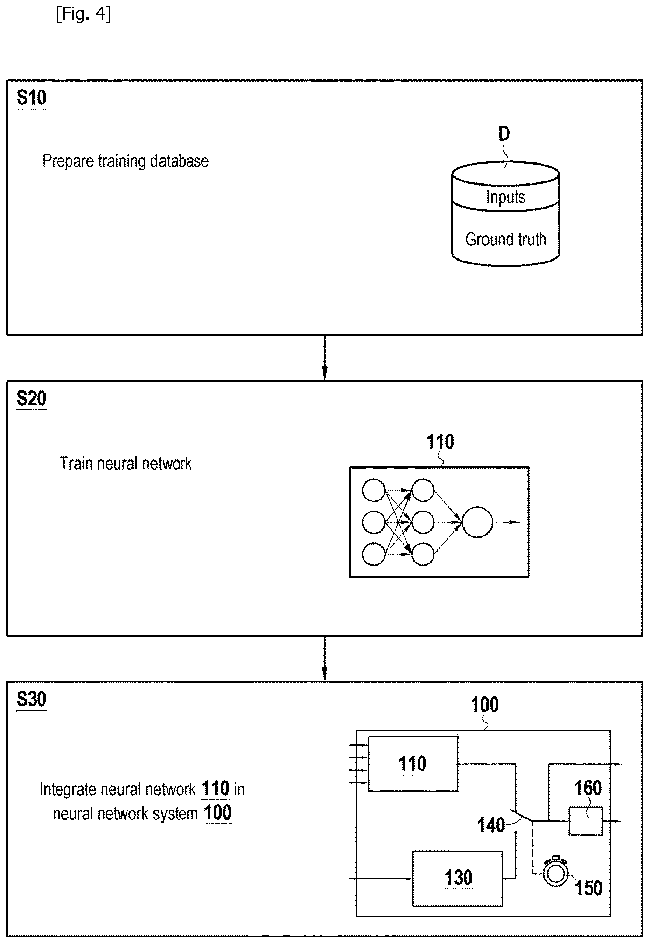

Fig. 4 shows a schematic representation of exemplary training methods according to embodiments of the present disclosure.

This method is used for training the neural network 110 to make it capable of determining the logarithmic particulate emissions LPE at an engine outlet.

The method comprises:

S10) Preparing the training database

The data which are necessary to train neural network 50 are prepared and stored in a database D.

These data comprise the 'ground truth', which is the data representing the desired output of the neural network 50, and the corresponding input data.

These data are constituted by several data sets which correspond respectively to different periods of operation of the engine. Each of these data sets comprises input data and output data for the successive time steps during one of these periods of operation.

The periods of operation of the engine which are considered can be preferably normalized operation cycles or periods defined by normalization. These cycles or periods of operation can be for instance those defined by the 'New European Driving Cycle' (NEDC), by the 'Worldwide Harmonised Light Vehicle Test Procedure' (WLTP), by the 'Real Driving Emissions' (RDE) test, etc.

The input data comprise the engine speed RS, the air mass flow AMF, the air/fuel ratio AFR, and possibly additional operating parameters of the engine 10, such as the EGR rate EGR, the oil and/or water temperature OW_T.

The output data is the 'ground truth', that is, the desired output of neural network 50.

The following two embodiments can be used for training the neural network 110:

## A) Training neural network 110 to predict logarithmic particulate emissions LPE

In this case, in database D, the ground truth data is constituted by the logarithmic particulate emission values LPE at the engine outlet, which are obtained by applying a logarithm function to the particulate emission values LPE as measured at the engine outlet.

## B) Training neural network 110 to directly predict particulate emissions PE

In this case, the ground truth data is constituted by the particulate emission values (LPE) at the engine outlet, as measured and recorded.

The measured particulate emission values used for preparing the training data set are actual values measured and recorded during different periods of operation of the engine.

Preferably, these different periods of operation during which input and output data is recorded and stored in database D represent varied operating conditions, in particular various transient operating conditions of the engine 10. Ideally, these values should represent conditions in which each operating parameter of the engine varies substantially, so that after having been trained, the neural network 50 be capable of estimating or determining the particulate emissions for all driving conditions.

## S20) Training neural network 110

Once database D is completed, the neural network 110 is trained. It therefore becomes capable of determining the logarithmic particulate emission value (LPE) (embodiment A) or the particulate emission value (LPE) (embodiment B) at the engine outlet.

For the training, in embodiment A any usual loss function for training neural network 110 can be used.

By contrast in embodiment B, the loss function used for training neural network 110 is such that the output of the loss function is based on a difference between a logarithm of measured values of the particulate emission values LPE at the engine outlet and outputted values of the particulate emission values LPE at the engine outlet outputted by the neural network 110.

The following improvements can be considered.

The training data set can include oil temperatures and/or water temperatures of the engine, and these values can be used as an input for the neural network 110 (which is then designed to receive this/these input(s)).

In addition, in case the engine (as engine 10 of the present exemplary embodiment) includes an EGR passage, the training data set can be organized to include EGR rates, and the neural network 110 can be designed to receive these EGR values can be used as an input.

In this case, the periods of operation of the engine during which data are recorded preferably include periods when the EGR passage is used in different manners.

Consequently, neural network 110 learns to make its predictions taking into account how the EGR passage is used (as indicated by EGR rate). This improves the accuracy of its predictions across the various possible operation modes of the engine.

## S30) Integrating neural network 110 in the neural network system 100

Finally, the neural network system 100 is completed by integrating the various units 110-160. The integration depends on how neural network 110 has been trained.

If neural network 110 has been trained to predict the logarithmic particulate emissions value (option A), system 100 is integrated as shown on Fig.2, including an exponential unit 120.

If neural network 110 has been trained to predict directly the particulate emissions value (option B), system 100 is integrated as shown on Fig.4. The system 100 schematically illustrated on Fig.4 is identical to the system 100 of Fig.2, except that it does not comprise an exponential unit. In this system, the particulate emissions value PE1 is directly outputted by the neural network 110.

## RESULTS

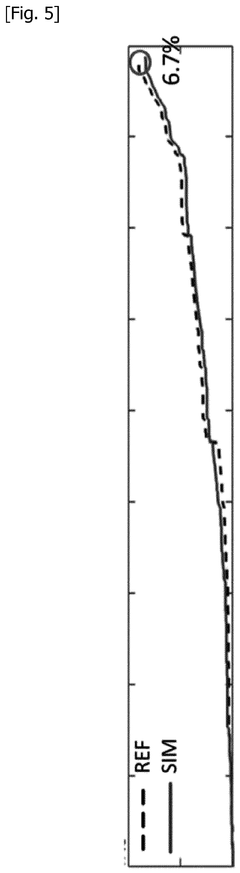

The results produced by system 100 are shown on Fig.5. This figure shows comparative curves of the particulate emissions at the outlet of an engine, respectively as measured and as determined by system 100. The difference between the determined and the measured values is still less than 7% after almost 9 seconds of operation of the engine.

Thus, by implementing a system and method according to the present disclosure, it may be possible to determine substantially more accurate particulate emissions determinations/predictions. In turn it therefore becomes possible to more efficiently design the exhaust gas after treatment system to meet regulatory and performance demands. This is particularly useful when simulations are utilized.

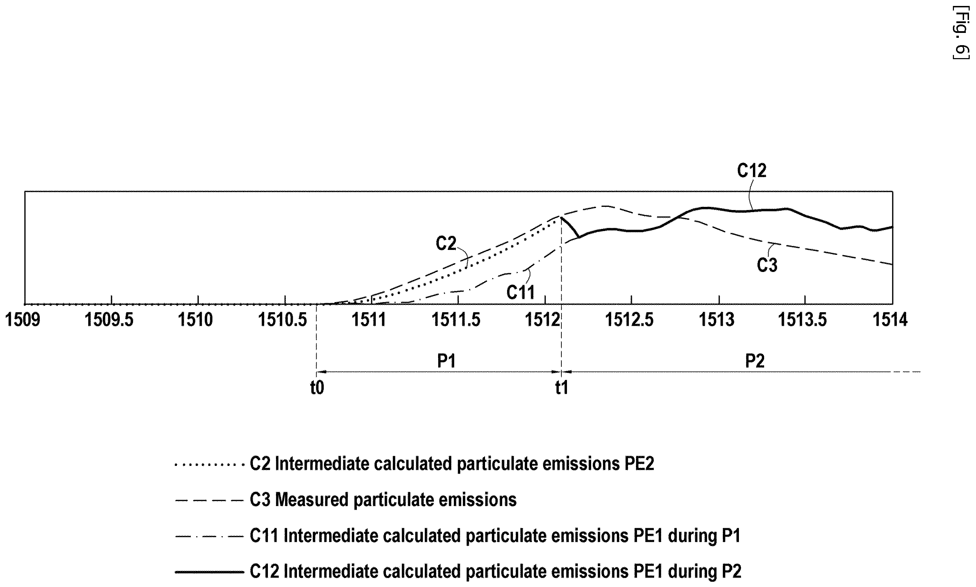

Fig. 6 is a graph explaining how the particulate emissions values at the outlet of engine 10 are determined as a function of time (in abscissa). Fig.6 shows the following curves:

- curves C11 and C12 represent the variations of the intermediate particulate emissions values PE1 as calculated by the exponential unit 120 in the embodiment A, or as calculated by the neural network 110 in the embodiment B, wherein C11 represents these variations during the period P1, and curve C12 represents these variations during the period P2;

- curve C2 represents the variations of the intermediate particulate emissions values as calculated by the static-model based emissions determination unit 130; and

- curve C3 represents the variations of the particulate emissions values as measured at the outlet of engine 10.

During the period before a first time point t0, the engine is stopped.

At time point t0, the engine is started, period P1 starts, and the method shown on Fig.3 is carried out. ECU 20 detects that the engine is started, and elapsed time ET elapsed from time point t0 is counted.

During a first period P1 extending from time t0 to a time point t1, at step S40 it is determined that the elapsed time since time point t0 is less than 2 seconds, and ECU 20 determines that the emission value PE is the emission value PE2 calculated by the static-model based emissions determination unit 130, represented by curve C2.

From time t1 on, at step S40 it is determined that the elapsed time since time point t0 is more than 2 seconds; period P2 starts; during this period, ECU 20 determines that the emission value PE is the emission value PE1 represented by curve C12.

As shown by Fig.6, during period P1 curve C2 represents the actual variations of the particulate emissions (illustrated by curve C3) much more accurately than curve C11. For this reason, the proposed determination method (as illustrated for instance by Fig.3) permits to output PE2 rather than PE1 as the particulate emissions PE value, and thus to output a very accurate PE value.

Conversely during the second period, the curve C12 which represents the particulate emissions as calculated by the exponential unit 120 (embodiment A) or as calculated by the neural network 110 (embodiment B) represents more efficiently the actual PE values than the values outputted by the static-model based emissions determination unit 130.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular embodiments, it is to be understood that these embodiments are merely illustrative of the principles and applications of the present disclosure.

It is intended that the specification and examples be considered as exemplary only, the scope of protection being defined by the appended claims.

**Claims**

1. A method for determining particulate emissions (PE) at an outlet of a gasoline engine (16), the method comprising:

   determining a logarithmic particulate emission value (LPE) at the engine outlet by means of a dynamic machine-learning-based model (110), using parameters (RS,AMF,AFR) associated with an engine operating state as an input;
   the parameters associated with the engine operating state comprising engine rotational speed, air-mass flow, and air-fuel ratio;
   applying an exponential function to the determined logarithmic particulate emission value (LPE) to yield the particulate emissions (PE) at the engine outlet (16);
   the machine-learning-based model being trained to determine logarithmic particulate emission values (LPE) at an outlet of a gasoline engine using a training method with a training dataset (D) and a loss function;
   the training dataset comprising parameters associated with an engine operating state, as an input, and logarithmic particulate emission values (LPE) at the engine outlet obtained by applying a logarithm function to measured particulate emission values (PE) at the engine outlet, as ground truth;
   an output of the loss function being based on a difference between a logarithm of measured values of the particulate emission values at the engine outlet and outputted values of the particulate emission values at the engine outlet outputted by the dynamic machine-learning-based unit (110).

2. The method according to claim 1, wherein

   the engine (10) includes an EGR passage (40) for exhaust gas recirculation;
   an EGR rate is a flow ratio of the gas flow through the EGR passage (40) and the gas flow at an engine inlet (14); and
   the EGR rate is used as an input for determining the logarithmic particulate emission value (LPE).

3. The method according to claim 1 or 2, wherein a water temperature and/or an oil temperature (OW_T) is used as an input for determining the logarithmic particulate emission value (LPE).

4. A method for determining particulate emissions (PE) at an outlet of a gasoline engine, the method comprising:

detecting that the engine is started; and,
when it has been detected that the engine (10) is started:

. during a first period (P1), determining particulate emissions (PE) at the engine outlet using a predetermined model and based on oil and/or water temperature (OW_T); and
. for a second period (P2) starting just after the first period, determining the particulate emissions (PE) at the engine outlet using the method according to any one of claims 1 to 3.

5. A method for determining soot amount contained in a gasoline particulate filter interposed on the exhaust pipe (30) of an engine, the method comprising:

determining particulate emissions (PE) at the engine outlet using the method according to any one of claims 1 to 4; and
determining the soot amount based on a gasoline particulate filter aftertreatment model and the determined particulate emissions (PE) at the engine outlet.

6. Use of the method according to any one of claims 1 to 5 to control the engine based on particulate emissions at the outlet of the engine or the soot amount in the gasoline particulate filter (35).

7. An engine control unit configured to carry out the method according to any one of claims 1 to 6.

8. A training method for training a dynamic machine-learning-based unit to determine logarithmic particulate emissions (PE) at an outlet of a gasoline engine with a training dataset;

a logarithmic particulate emission value at the engine outlet being a value obtained by applying a logarithm function to a measured particulate emission value at the engine outlet;
the training dataset comprising parameters associated with an engine operating state, as an input, and logarithmic particulate emission values (LPE) at the engine outlet obtained by applying a logarithm function to measured particulate emission values (LPE) at the engine outlet, as ground truth;
the parameters associated with the engine operating state comprising engine rotational speed, air-mass flow, and air-fuel ratio.

9. A training method for training a system (100) for determining particulate emissions (PE) at an outlet of a gasoline engine;

the system for determining particulate emissions (100) comprising a dynamic machine-learning-based unit (110);
the method comprises training the dynamic machine-learning-based unit (110) using a loss function and a training data set (D), using the training method according to claim 8;
an output of the loss function being based on a difference between a logarithm of measured values of the particulate emission values (LPE) at the engine outlet and outputted values of the particulate emission values (LPE) at the engine outlet outputted by the dynamic machine-learning-based unit (110).

10. The training method for training a system (100) for determining particulate emissions (PE) at an outlet of a gasoline engine according to claim 9, wherein the dynamic machine-learning-based system comprises an exponential unit (120) configured to apply an exponential function to the determined logarithmic particulate emission value (LPE) to yield the particulate emissions (PE) at the engine outlet.

11. The training method according to any one of claims 8 to 10, wherein

the engine includes an EGR passage (40) for exhaust gas recirculation;
an EGR rate is a flow ratio of the gas flow through the EGR an EGR passage (40) and the gas flow at an engine inlet; and
the EGR rate is used as an input of the dynamic machine-learning-based unit (110).

12. The training method according to any one of claims 8 to 11, wherein water temperature and/or oil temperature (OW_T) is or are used as an input of the dynamic machine-learning-based unit (110).

13. A system for determining particulate emissions (PE) at an outlet of a gasoline engine, the system comprising processing means configured to:

determine a logarithmic particulate emission value (LPE) at the engine outlet by means of a dynamic machine-learning-based model, using parameters associated with an engine operating state as an input; and
apply an exponential function to the determined logarithmic particulate emission value (LPE) to yield the particulate emissions (PE) at the engine outlet; and
the parameters associated with the engine operating state comprising engine rotational speed, air-mass flow, and air-fuel ratio;
the machine-learning-based model being trained to determine logarithmic particulate emission values (LPE) at an outlet of a gasoline engine using a training method with a training dataset (D) and a loss function;

the training dataset comprising parameters associated with an engine operating state, as an input, and logarithmic particulate emission values (LPE) at the engine outlet obtained by applying a logarithm function to measured particulate emission values (PE) at the engine outlet, as ground truth;

an output of the loss function being based on a difference between a logarithm of measured values of the particulate emission values (LPE) at the engine outlet and outputted values of the particulate emission values (LPE) at the engine outlet outputted by the dynamic machine-learning-based unit (110).

14. The system for determining particulate emissions (PE) according to claim 13, wherein the processing means are configured:

to detect that the engine is started; and, when it has been detected that the engine is started, during a first period, to determine particulate emissions (PE) at the engine outlet using a predetermined static model and based on oil temperature.

15. A system for determining soot amount contained in a gasoline particulate filter interposed on the exhaust pipe (30) of an engine,

the system comprising a system for determining particulate emissions (PE) according to any one of claims 13 to 14,

where the processing means are further configured to determine the soot amount based on a gasoline particulate filter aftertreatment model and the determined particulate emissions (PE) at the engine outlet.

16. An engine control unit, comprising the system for determining particulate emissions (PE) according to any one of claims 13 to 14, configured to control the engine based on the determined particulate emissions at the outlet of the engine.

17. A computer program which is stored on a computer readable storage media, and which is suitable for being performed on a computer, the program including instructions adapted to perform the steps of a method according to any one of claims 1 to 6 or any one of claims 8 to 12 when it is run on the computer.

18. A computer-readable recording medium including instructions of a computer program according to claim 17.

**Patentansprüche**

1. Verfahren zum Bestimmen von Partikelemissionen (PE) an einem Auslass eines Benzinmotors (16), das Verfahren umfassend:

Bestimmen eines logarithmischen Partikelemissionswerts (LPE) an dem Motorauslass mittels eines dynamischen, auf maschinellem Lernen basierenden Modells (110) unter Verwendung von Parametern (RS, AMF, AFR), die mit einem Motorbetriebszustand als Eingang assoziiert sind;

die mit dem Motorbetriebszustand assoziierten Parameter umfassend Motordrehzahl, Luftmassenstrom und Luft-Kraftstoff-Verhältnis;

Anwenden einer Exponentialfunktion auf den bestimmten logarithmischen Partikelemissionswert (LPE), um die Partikelemissionen (PE) an dem Motorauslass (16) zu bestimmen;

wobei das auf maschinellem Lernen basierende Modell trainiert ist, um logarithmische Partikelemissionswerte (LPE) an einem Auslass eines Benzinmotors unter Verwendung eines Trainingsverfahrens mit einem Trainingsdatensatz (D) und einer Verlustfunktion zu bestimmen;

der Trainingsdatensatz umfassend als Eingang Parameter, die mit einem Motorbetriebszustand assoziiert sind, und logarithmische Partikelemissionswerte (LPE) an dem Motorauslass, die durch Anwenden einer Logarithmusfunktion auf gemessene Partikelemissionswerte (PE) an dem Motorauslass erlangt werden, als Referenz;

wobei ein Ausgang der Verlustfunktion auf einer Differenz zwischen einem Logarithmus von gemessenen Werten der Partikelemissionswerte an dem Motorauslass und ausgegebenen Werten der Partikelemissionswerte an dem Motorauslass basiert, die von der auf dynamischen, auf maschinellem Lernen basierenden Einheit (110) ausgegeben werden.

2. Verfahren nach Anspruch 1, wobei

der Motor (10) einen AGR-Kanal (40) für Abgasrückführung beinhaltet;

eine AGR-Rate eine Durchflussverhältnis zwischen dem Gasstrom durch den AGR-Kanal (40) und dem Gasstrom an einem Motoreinlass (14) ist; und

die AGR-Rate als Eingang zum Bestimmen des logarithmischen Partikelemissionswerts (LPE) verwendet wird.

3. Verfahren nach Anspruch 1 oder 2, wobei eine Wassertemperatur und/oder eine Öltemperatur (OW_T) als Eingang zum Bestimmen des logarithmischen Partikelemissionswerts (LPE) verwendet wird.

4. Verfahren zum Bestimmen von Partikelemissionen (PE) an einem Auslass eines Benzinmotors, das Verfahren umfassend:
   Erkennen, dass der Motor gestartet ist; und

   • wenn erkannt worden ist, dass der Motor (10) gestartet ist: während einer ersten Periode (P1), Bestimmen von Partikelemissionen (PE) an dem Motorauslass unter Verwendung eines vorbestimmten Modells und basierend auf der Öl- und/oder Wassertemperatur (OW_T); und
   • über eine zweite Periode (P2), die unmittelbar nach der ersten Periode beginnt, Bestimmen der Partikelemissionen (PE) an dem Motorauslass unter Anwendung des Verfahrens nach einem der Ansprüche 1 bis 3.

5. Verfahren zum Bestimmen einer Rußmenge, die in einem Benzinpartikelfilter enthalten ist, der an dem Abgasrohr (30) eines Motors eingefügt ist, das Verfahren umfassend:

   Bestimmen von Partikelemissionen (PE) an dem Motorauslass unter Verwendung des Verfahrens nach einem der Ansprüche 1 bis 4; und
   Bestimmen der Rußmenge basierend auf einem Benzinpartikelfilter-Nachbehandlungsmodell und den bestimmten Partikelemissionen (PE) an dem Motorauslass.

6. Verwendung des Verfahrens nach einem der Ansprüche 1 bis 5 zum Steuern des Motors basierend auf den Partikelemissionen an dem Auslass des Motors oder der Rußmenge in dem Benzinpartikelfilter (35).

7. Motorsteuereinheit, die konfiguriert ist, um das Verfahren nach einem der Ansprüche 1 bis 6 durchzuführen.

8. Trainingsverfahren zum Trainieren einer dynamischen, auf maschinellem Lernen basierenden Einheit zum Bestimmen logarithmischer Partikelemissionen (PE) an einem Auslass eines Benzinmotors mit einem Trainingsdatensatz;

   wobei ein logarithmischer Partikelemissionswert an dem Motorauslass ein Wert ist, der durch Anwenden einer Logarithmusfunktion auf einen gemessenen Partikelemissionswert an dem Motorauslass erlangt wird;
   der Trainingsdatensatz umfassend als Eingang Parameter, die mit einem Motorbetriebszustand assoziiert sind, und logarithmische Partikelemissionswerte (LPE) an dem Motorauslass, die durch Anwenden einer Logarithmusfunktion auf gemessene Partikelemissionswerte (LPE) an dem Motorauslass erlangt werden, als Referenz;
   die mit dem Motorbetriebszustand assoziierten Parameter umfassend Motordrehzahl, Luftmassenstrom und Luft-Kraftstoff-Verhältnis.

9. Trainingsverfahren zum Trainieren eines Systems (100) zum Bestimmen von Partikelemissionen (PE) an einem Auslass eines Benzinmotors;

   das System zum Bestimmen von Partikelemissionen (100) umfassend eine dynamische, auf maschinellem Lernen basierende Einheit (110); wobei das Verfahren ein Trainieren der dynamischen, auf maschinellem Lernen basierenden Einheit (110) unter Verwendung einer Verlustfunktion und eines Trainingsdatensatzes (D), unter Verwendung des Trainingsverfahrens nach Anspruch 8;
   wobei ein Ausgang der Verlustfunktion auf einer Differenz zwischen einem Logarithmus von gemessenen Werten der Partikelemissionswerte (LPE) an dem Motorauslass und ausgegebenen Werten der Partikelemissionswerte (LPE) an dem Motorauslass basiert, die von der auf dynamischen, auf maschinellem Lernen basierenden Einheit (110) ausgegeben werden.

10. Trainingsverfahren zum Trainieren eines Systems (100) zum Bestimmen von Partikelemissionen (PE) an einem Auslass eines Benzinmotors nach Anspruch 9, wobei
    das dynamische, auf maschinellem Lernen basierende System eine Exponentialeinheit (120) umfasst, die konfiguriert ist, um eine Exponentialfunktion auf den bestimmten logarithmischen Partikelemissionswert (LPE) anzuwenden, um die Partikelemissionen (PE) an dem Motorauslass zu erlangen.

11. Trainingsverfahren nach einem der Ansprüche 8 bis 10, wobei

    der Motor einen AGR-Kanal (40) für Abgasrückführung beinhaltet;
    eine AGR-Rate ein Durchflussverhältnis des Gasstroms durch die AGR ein AGR-Kanal (40) und des Gasstrom an einem Motoreinlass ist; und
    die AGR-Rate als Eingang der dynamischen, auf maschinellem Lernen basierende Einheit (110) verwendet wird.

12. Trainingsverfahren nach einem der Ansprüche 8 bis 11, wobei die Wassertemperatur und/oder die Öltemperatur (OW_T) als Eingang für die dynamische, auf maschinellem Lernen basierende Einheit (110) verwendet wird.

**13.** System zum Bestimmen von Partikelemissionen (PE) an einem Auslass eines Benzinmotors, das System umfassend Verarbeitungseinrichtungen, die zu Folgendem konfiguriert sind:

Bestimmen eines logarithmischen Partikelemissionswerts (LPE) an dem Motorauslass mittels eines dynamischen, auf maschinellem Lernen basierenden Modells unter Verwendung von Parametern, die mit einem Motorbetriebszustand als Eingang assoziiert sind; und
Anwenden einer Exponentialfunktion auf den bestimmten logarithmischen Partikelemissionswert (LPE), um die Partikelemissionen (PE) an dem Motorauslass zu bestimmen; und
die mit dem Motorbetriebszustand assoziierten Parameter umfassend Motordrehzahl, Luftmassenstrom und Luft-Kraftstoff-Verhältnis;
wobei das auf maschinellem Lernen basierende Modell trainiert ist, um logarithmische Partikelemissionswerte (LPE) an einem Auslass eines Benzinmotors unter Verwendung eines Trainingsverfahrens mit einem Trainingsdatensatz (D) und einer Verlustfunktion zu bestimmen;
der Trainingsdatensatz umfassend als Eingang Parameter, die mit einem Motorbetriebszustand assoziiert sind, und logarithmische Partikelemissionswerte (LPE) an dem Motorauslass, die durch Anwenden einer Logarithmusfunktion auf gemessene Partikelemissionswerte (PE) an dem Motorauslass erlangt werden, als Referenz;
wobei ein Ausgang der Verlustfunktion auf einer Differenz zwischen einem Logarithmus von gemessenen Werten der Partikelemissionswerte (LPE) an dem Motorauslass und ausgegebenen Werten der Partikelemissionswerte (LPE) an dem Motorauslass basiert, die von der auf dynamischen, auf maschinellem Lernen basierenden Einheit (110) ausgegeben werden.

**14.** System zum Bestimmen von Partikelemissionen (PE) nach Anspruch 13, wobei die Verarbeitungseinrichtungen zu Folgendem konfiguriert sind:

um zu erkennen, dass der Motor gestartet ist; und,
wenn erkannt worden ist, dass der Motor gestartet ist, während einer ersten Periode, Bestimmen der Partikelemissionen (PE) an dem Motorauslass unter Verwendung eines vorbestimmten statischen Modells und basierend auf Öltemperatur.

**15.** System zum Bestimmen einer Rußmenge, die in einem Benzinpartikelfilter enthalten ist, der an dem Abgasrohr (30) eines Motors eingefügt ist,

das System umfassend ein System zum Bestimmen von Partikelemissionen (PE) nach einem der Ansprüche 13 bis 14,
wobei die Verarbeitungseinrichtungen ferner konfiguriert sind, um die Rußmenge basierend auf einem Benzinpartikelfilter-Nachbehandlungsmodell und den bestimmten Partikelemissionen (PE) an dem Motorauslass zu bestimmen.

**16.** Motorsteuereinheit, umfassend das System zum Bestimmen von Partikelemissionen (PE) nach einem der Ansprüche 13 bis 14 und die konfiguriert ist, um den Motor basierend auf den bestimmten Partikelemissionen an dem Auslass des Motors zu steuern.

**17.** Computerprogramm, das auf einem computerlesbaren Speichermedium gespeichert und geeignet ist, um auf einem Computer durchgeführt zu werden, wobei das Programm Anweisungen beinhaltet, die angepasst sind, um die Schritte eines Verfahrens nach einem der Ansprüche 1 bis 6 oder einem der Ansprüche 8 bis 12 durchzuführen, wenn es auf dem Computer läuft.

**18.** Computerlesbares Aufzeichnungsmedium, das Anweisungen eines Computerprogramms nach Anspruch 17 beinhaltet.

**Revendications**

**1.** Procédé destiné à déterminer des émissions de particules (PE) au niveau d'une sortie d'un moteur à essence (16), le procédé comprenant :

la détermination d'une valeur logarithmique d'émission de particules (LPE) au niveau de la sortie de moteur au moyen d'un modèle basé sur un apprentissage de machine dynamique (110), en utilisant des paramètres (RS, AMF, AFR) associés à un état de fonctionnement de moteur comme entrée ;
les paramètres associés à l'état de fonctionnement de moteur comprenant une vitesse de rotation de moteur, un écoulement de masse d'air, et un rapport air-carburant ;
l'application d'une fonction exponentielle sur la valeur logarithmique déterminée d'émission de particules (LPE) pour obtenir les émissions de particules (PE) au niveau de la sortie de moteur (16) ;
le modèle basé sur un apprentissage de machine étant entraîné pour déterminer des valeurs logarithmiques d'émission de particules (LPE) au niveau d'une sortie d'un moteur à essence en utilisant un procédé d'entraînement avec un ensemble de données d'entraînement (D) et une fonction de perte ;

l'ensemble de données d'entraînement comprenant des paramètres associés à un état de fonctionnement de moteur, comme entrée, et des valeurs logarithmiques d'émission de particules (LPE) au niveau de la sortie de moteur obtenues en appliquant une fonction logarithmique sur des valeurs mesurées d'émission de particules (PE) au niveau de la sortie de moteur, en tant que vérité de base ;

une sortie de la fonction de perte étant basée sur une différence entre un logarithme de valeurs mesurées des valeurs d'émission de particules au niveau de la sortie de moteur et des valeurs délivrées des valeurs d'émission de particules au niveau de la sortie de moteur délivrées par l'unité basée sur un apprentissage de machine dynamique (110).

**2.** Procédé selon la revendication 1, selon lequel

le moteur (10) comprend un passage de recyclage de gaz d'échappement (40) pour un recyclage de gaz d'échappement ;

un taux de recyclage de gaz d'échappement est un rapport d'écoulement de l'écoulement de gaz à travers le passage de recyclage de gaz d'échappement (40) et l'écoulement de gaz au niveau d'une admission de moteur (14) ; et

le taux de recyclage de gaz d'échappement est utilisé comme entrée pour déterminer la valeur logarithmique d'émission de particules (LPE).

**3.** Procédé selon la revendication 1 ou 2, selon lequel une température d'eau et/ou une température d'huile (OW_T) est utilisée comme entrée pour déterminer la valeur logarithmique d'émission de particules (LPE).

**4.** Procédé destiné à déterminer des émissions de particules (PE) au niveau d'une sortie d'un moteur à essence, le procédé comprenant :

la détection du fait que le moteur est démarré ; et,

lorsque l'on a détecté que le moteur (10) est démarré :

- pendant une première période (P1), la détermination d'émissions de particules (PE) au niveau de la sortie de moteur en utilisant un modèle prédéterminé et sur la base d'une température d'huile et/ou d'eau (OW_T) ; et

- pendant une deuxième période (P2) qui commence juste après la première période, la détermination des émissions de particules (PE) au niveau de la sortie de moteur en utilisant le procédé selon l'une quelconque des revendications 1 à 3.

**5.** Procédé destiné à déterminer une quantité de suie contenue dans un filtre à particules d'essence interposé sur la tubulure d'échappement (30) d'un moteur, le procédé comprenant :

la détermination d'émissions de particules (PE) au niveau de la sortie de moteur en utilisant le procédé selon l'une quelconque des revendications 1 à 4 ; et

la détermination de la quantité de suie sur la base d'un modèle de post-traitement de filtre à particules d'essence et des émissions de particules déterminées (PE) au niveau de la sortie de moteur.

**6.** Utilisation du procédé selon l'une quelconque des revendications 1 à 5 pour commander le moteur sur la base d'émissions de particules à la sortie du moteur ou de la quantité de suie dans le filtre à particules d'essence (35).

**7.** Unité de commande de moteur configurée pour mettre en œuvre le procédé selon l'une quelconque des revendications 1 à 6.

**8.** Procédé d'entraînement destiné à entraîner une unité basée sur un apprentissage de machine dynamique pour déterminer des émissions de particules logarithmiques (PE) au niveau d'une sortie d'un moteur à essence avec un ensemble de données d'entraînement ;

une valeur logarithmique d'émission de particules au niveau de la sortie de moteur étant une valeur obtenue en appliquant une fonction logarithmique sur une valeur mesurée d'émission de particules au niveau de la sortie de moteur ;

l'ensemble de données d'entraînement comprenant des paramètres associés à un état de fonctionnement de moteur, comme entrée, et des valeurs logarithmiques d'émission de particules (LPE) au niveau de la sortie de moteur obtenues en appliquant une fonction logarithmique sur des valeurs mesurées d'émission de particules (LPE) au niveau de la sortie de moteur, en tant que vérité de base ;

les paramètres associés à l'état de fonctionnement de moteur comprenant une vitesse de rotation de moteur, un écoulement de masse d'air, et un rapport air-carburant.

**9.** Procédé d'entraînement destiné à entraîner un système (100) pour déterminer des émissions de particules (PE) au niveau d'une sortie d'un moteur à essence ;

le système destiné à déterminer des émissions de particules (100) comprenant une unité basée sur un apprentissage de machine dynamique (110) ;

le procédé comprend un entraînement de l'unité basée sur un apprentissage de machine dynamique (110) en utilisant une fonction de perte et un ensemble de données d'entraînement (D), en utilisant le procédé d'entraînement selon la revendication 8 ;

une sortie de la fonction de perte étant basée sur une différence entre un logarithme de valeurs mesurées des valeurs d'émission de particules (LPE) au niveau de la sortie de moteur et des valeurs délivrées des valeurs d'émission de particules (LPE) au niveau de la sortie de moteur délivrées par l'unité basée sur un apprentissage de machine dynamique (110).

10. Procédé d'entraînement destiné à entraîner un système (100) pour déterminer des émissions de particules (PE) au niveau d'une sortie d'un moteur à essence selon la revendication 9, selon lequel le système basé sur un apprentissage de machine dynamique comprend une unité exponentielle (120) configurée pour appliquer une fonction exponentielle sur la valeur logarithmique déterminée d'émission de particules (LPE) pour obtenir les émissions de particules (PE) au niveau de la sortie de moteur.

11. Procédé d'entraînement selon l'une quelconque des revendications 8 à 10, selon lequel

le moteur comprend un passage de recyclage de gaz d'échappement (40) pour un recyclage de gaz d'échappement ;

un taux de recyclage de gaz d'échappement est un rapport d'écoulement de l'écoulement de gaz à travers le passage de recyclage de gaz d'échappement (40) et de l'écoulement de gaz au niveau d'une entrée de moteur ; et

le taux de recyclage de gaz d'échappement est utilisé comme entrée de l'unité basée sur un apprentissage de machine dynamique (110).

12. Procédé d'entraînement selon l'une quelconque des revendications 8 à 11, selon lequel une température d'eau et/ou une température d'huile (OW_T) est ou sont utilisées comme entrée de l'unité basée sur un apprentissage de machine dynamique (110).

13. Système destiné à déterminer des émissions de particules (PE) au niveau d'une sortie d'un moteur à essence, le système comprenant des moyens de traitement configurés pour :

déterminer une valeur logarithmique d'émission de particules (LPE) au niveau de la sortie de moteur au moyen d'un modèle basé sur un apprentissage de machine dynamique, en utilisant des paramètres associés à un état de fonctionnement de moteur comme entrée ; et

appliquer une fonction exponentielle sur la valeur logarithmique déterminée d'émission de particules (LPE) pour obtenir les émissions de particules (PE) au niveau de la sortie de moteur ; et

les paramètres associés à l'état de fonctionnement de moteur comprenant une vitesse de rotation de moteur, un écoulement de masse d'air, et un rapport air-carburant ;

le modèle basé sur un apprentissage de machine étant entraîné pour déterminer des valeurs logarithmiques d'émission de particules (LPE) au niveau d'une sortie d'un moteur à essence en utilisant un procédé d'entraînement avec un ensemble de données d'entraînement (D) et une fonction de perte ;

l'ensemble de données d'entraînement comprenant des paramètres associés à un état de fonctionnement de moteur, comme entrée, et des valeurs logarithmiques d'émission de particules (LPE) au niveau de la sortie de moteur obtenues en appliquant une fonction logarithmique sur des valeurs mesurées d'émission de particules (PE) au niveau de la sortie de moteur, en tant que vérité de base ;

une sortie de la fonction de perte étant basée sur une différence entre un logarithme des valeurs mesurées de valeurs d'émission de particules (LPE) au niveau de la sortie de moteur et des valeurs délivrées des valeurs d'émission de particules (LPE) au niveau de la sortie de moteur délivrées par l'unité basée sur un apprentissage de machine dynamique (110).

14. Système destiné à déterminer des émissions de particules (PE) selon la revendication 13, dans lequel les moyens de traitement sont configurés :

pour détecter que le moteur est démarré ; et, lorsque l'on a détecté que le moteur est démarré, pendant une première période, pour déterminer des émissions de particules (PE) au niveau de la sortie de moteur en utilisant un modèle statique prédéterminé et sur la base d'une température d'huile.

15. Système destiné à déterminer une quantité de suie contenue dans un filtre à particules d'essence interposé sur la tubulure d'échappement (30) d'un moteur,

le système comprenant un système destiné à déterminer des émissions de particules (PE) selon l'une quelconque des revendications 13 à 14,

les moyens de traitement étant en outre configurés pour déterminer la quantité de suie sur la base d'un modèle de post-traitement de filtre à particules d'essence et des émissions de particules déterminées (PE) au niveau de la sortie de moteur.

16. Unité de commande de moteur, comprenant le système destiné à déterminer des émissions de particules (PE) selon l'une quelconque des revendications 13 à 14, configurée pour commander le moteur sur la base des émissions de particules déterminées au niveau de la sortie du moteur.

17. Programme informatique qui est stocké sur un support de stockage lisible par ordinateur, et qui est adapté à une mise en œuvre sur un ordinateur, le programme comprenant des instructions prévues pour réaliser les étapes d'un procédé selon l'une quelconque des revendications 1 à 6 ou l'une quelconque des revendications 8 à 12 lorsqu'il fonctionne sur l'ordinateur.

18. Support d'enregistrement lisible par ordinateur comprenant des instructions d'un programme informatique selon la revendication 17.

[Fig. 1]

[Fig. 2]

[Fig. 3]

[Fig. 4]

**S10**

Prepare training database

D

Inputs

Ground truth

**S20**

Train neural network

110

**S30**

Integrate neural network **110** in neural network system **100**

100

110

140

130

160

150

[Fig. 5]

[Fig. 6]

**REFERENCES CITED IN THE DESCRIPTION**

**Non-patent literature cited in the description**

- **WONG, KA IN et al.** Modelling of diesel engine performance using advanced machine learning methods under scarce and exponential data set. *Applied Soft Computing*, 2013, vol. 13 (11), 4428-4441